# EUROPEAN PATENT SPECIFICATION

(11) **EP 1 412 205 B1**
(45) Date of publication and mention of the grant of the patent: **08.03.2006**
(21) Application number: 02764802.1
(22) Date of filing: 29.07.2002
(51) Int. Cl.: B60C 11/11, B60C 11/13

(54) **TYRE, PARTICULARLY SUITABLE FOR SNOW-COVERED GROUND**
INSBESONDERE FÜR SCHNEEBEDECKTEN BODEN GEEIGNETER REIFEN
PNEU PARTICULIEREMENT ADAPTE AU SOL RECOUVERT DE NEIGE

(30) Priority: 03.08.2001 EP 01830526; 25.09.2001 US 324275 P
(43) Date of publication of application: 28.04.2004
(73) Proprietor: PIRELLI PNEUMATICI Società per Azioni, 20126 Milano (IT)
(72) Inventor: COLOMBO, Gianfranco, I-20049 Concorezzo (IT); VEGRO, Andrea, I-21040 Uboldo (IT)
(74) Representative: Colombo, Stefano Paolo
(86) International application number: PCT/EP2002/008411
(87) International publication number: WO 2003/013881

(56) References cited:
- EP-A- 0 354 718
- PATENT ABSTRACTS OF JAPAN vol. 1999, no. 12, 29 October 1999 (1999-10-29) & JP 11 180115 A (BRIDGESTONE CORP), 6 July 1999 (1999-07-06)
- PATENT ABSTRACTS OF JAPAN vol. 2000, no. 02, 29 February 2000 (2000-02-29) & JP 11 321238 A (SUMITOMO RUBBER IND LTD), 24 November 1999 (1999-11-24)

## Description

The present invention relates to tyres for motor vehicles, particularly for use on snow-covered ground.

A tyre in its most general form comprises a casing structure, including a central crown portion and two axially opposed sidewalls terminating in a pair of beads for fixing to the rim of a wheel, and a tread extending coaxially around the crown portion. In radial casing tyres there is also a belt structure associated coaxially with the casing structure.

In turn, the tread comprises a relief pattern formed by a plurality of circumferential and transverse grooves which, in combination, give rise to a plurality of blocks distributed according to different types of configuration, for example along a central area extending across the equatorial plane and in at least two shoulder areas, extending on axially opposite sides of the central area.

The configuration of the blocks can vary, but generally each of them projects from the base surface of the tread to terminate in a top surface.

Each block is generally delimited by a pair of longitudinal lateral surfaces and a pair of transverse lateral surfaces, the first of these being directed parallel to the equatorial plane or with a slight inclination with respect to it, while the second surfaces intersect the first in a generally axial direction and in any case with a large angle of inclination with respect to the equatorial plane.

The longitudinal and transverse lateral surfaces of the blocks are also the walls delimiting the aforesaid grooves: the base surfaces of the said grooves coincide with the said base surface of the tread.

Of particular importance for a tyre for snow-covered ground is the presence in the blocks of suitable sipes, in other words a dense series of slots or very narrow grooves, orientated essentially transversely to the direction of rolling, the function of the sipes being essentially to collect and efficiently retain the snow, since the friction of snow on snow is well known to be greater than the friction of snow on rubber.

For example, US Patent 5,711,828 describes a tyre for snow-covered ground provided with a tread pattern formed by a plurality of blocks, each grooved with a plurality of zigzag sipes which are all parallel to each other.

The document EP 0,713,790 A2 describes a winter tyre designed to improve performance on snow by maintaining good characteristics of resistance to the known phenomenon of aquaplaning.

This tyre comprises three circumferential grooves intersected by a plurality of transverse grooves forming in combination two circumferential rows of central blocks at the sides of the equatorial plane and two circumferential rows of shoulder blocks.

The central blocks are in the shape of parallelograms having longitudinal sides inclined at an angle of 3° to 15° to the equatorial plane. Each block is provided with a plurality of zigzag sipes running transversely to the block and parallel to each other. Some sipes have notches, with a width and depth of approximately 1 mm, at their ends.

Each of these notches has walls delimited by the elastomeric material of the block and opens into a longitudinal groove.

US Patent 4,815,511 relates to a tyre of the all-seasons type, made to improve the traction characteristics on snow-covered ground.

The tyre comprises four circumferential grooves and a plurality of transverse grooves forming, in combination, three circumferential rows of blocks, namely one central and two lateral rows, and two rows of shoulder blocks.

Each row comprises a first and a second set of triangular blocks alternating with each other circumferentially.

The blocks of one set have sides forming the walls of a first circumferential groove and vertices opposite these sides located on the walls delimiting a second groove, while the blocks of the other set have vertices aligned with the sides of the first set and opposing sides between the vertices of the first set.

Each block of each row has, in a central position on each longitudinal side, a semicircular notch of small size, open towards the circumferential groove.

Each notch is associated with a narrow sipe running transversely to the block over a short distance.

The tyre is described as an improvement to a prior art tyre in which each block is in the shape of a parallelogram and comprises a pair of notches of trapezoidal shape, extending transversely towards the inside of the block.

These notches open into the circumferential grooves, and are staggered circumferentially with respect to each other in each block, thus forming an essentially S-shaped block.

Additionally, US Patent 6,003,574 held by the present applicant discloses a tyre for snow-covered ground, provided with a tread in which the circumferential grooves are delimited by a sequence of portions which are orientated obliquely with respect to the direction of circumferential extension of the tyre; these oblique portions converge symmetrically towards the equatorial plane, but in a direction opposite to the direction of convergence of the transverse grooves.

Each of the oblique portions of the circumferential grooves extends between two consecutive transverse grooves and delimits opposing circumferential edges of a centre block and a shoulder block.

In this solution; each of the centre and shoulder blocks has a corner projecting into the corresponding circumferential groove, with respect to the adjacent corner of the immediately following block.

In this situation, the projecting corners of the central blocks act as teeth which ensure a grip on the snow in traction, while the projecting corners of the shoulder blocks produce this effect during braking.

In order to increase the grip on snow, the tyre also has a notch of trapezoidal shape extending into every two adjacent blocks in each centre row.

This notch passes through the transverse groove between the two centre blocks and has an axially inner circumferential edge and an axially outer circumferential edge, which diverge from each other, at angles preferably in the range from 3° to 15°, in a direction opposite to the rolling direction.

EP-A-0 354 718 discloses a pneumatic radial tyre comprising a tread provided with at least two main grooves extending in the circumferential direction of the tyre and lateral grooves connecting said main grooves to form multiple tread blocks having two side walls facing the main grooves and two end walls facing the lateral grooves. Each of said blocks is provided on the side walls thereof with at least two side grooves. The depth of each side groove in the axial direction of the tyre is 5 - 50 % of the block width. According to EP-A-0 354 718, the side grooves would enhance the snow scraping effect of the total blocks and would improve the starting, accelerating and braking performance properties on snow in comparison with blocks having no side grooves; furthermore, the edges between the side groove faces and the tread face would enhance the ice shaving effect.

Having examined the prior art indicated above, the applicant has found that it is possible to improve the roadholding of the tyre on snow-covered ground, by forming special notches, designed to act as traps for the encapsulation of snow, in the blocks, making use of the removal of elastomeric material over a longitudinally extending portion of the lateral surface forming the delimiting wall of a first groove.

It has also been found that the making of such notches extending for a considerable distance in the longitudinal direction and open along the delimiting edge between a lateral surface of the block and the corresponding top surface makes it possible to store a sufficient quantity of snow to improve the grip on the ground.

It has also proved possible to improve the capture of snow by making the notch in a pyramidal shape, preferably with the base surface closed at one end, and terminating at the other end with its vertex lying on the wall delimiting the said first groove.

It has also been found that, by removing the elastomeric material as indicated above, it is possible to form a step in the top surface of the block, thus surprisingly keeping unchanged the resistance of the block to the forces acting against the surface of the block in which this step is cut.

In a first aspect, the invention relates to a tyre in accordance with claim 1.

Preferably, the said at least one notch is formed along the delimiting edge between the said top surface and the wall delimiting the said groove.

In a preferred embodiment, each of the blocks of at least one circumferential row comprises at least one of these notches.

Preferably, the said base of the notch is generated by a plane intersecting the block at a predetermined distance from the vertex.

In one embodiment, all the notches formed in a surface of the block delimiting the same groove are tapered in the same direction, preferably in - the direction opposite the direction of rolling of the tyre.

In an alternative embodiment to the preceding one, these notches are tapered in opposite directions.

Preferably, each block of the said at least one row comprises at least a first and a second longitudinal notch, the first notch being on the delimiting edge between the top surface and a first longitudinal lateral surface, and the second notch being on the delimiting edge between the top surface and a second longitudinal lateral surface.

Even more preferably, the said first and second notches have tapers in opposite directions to each other in each block.

In some embodiments, the tyre can comprise, in at least one block, at least one notch running transversely with respect to the direction of movement, and preferably the said at least one transverse notch is formed along the delimiting edge between the top surface and a transverse lateral surface of the block.

Preferably, the tyre comprises, in each block, a pair of the said notches which are transverse with respect to the direction of movement, each of these notches being formed along the delimiting edge between the top surface and a corresponding transverse lateral surface.

These transverse notches can be formed in blocks in which one or more longitudinal notches are provided.

In a preferred embodiment, the notch, whether longitudinal or transverse, has a pyramidal shape, essentially delimited by a base and by two lateral planes, namely the first and the second plane, which are incident on each other, in the absence of other delimiting planes, since the notch is open on its outer sides; more particularly, the first plane is perpendicular to the top surface of the block and inclined at an angle α to the wall of the groove in which the notch is formed, while the second plane is inclined at an angle β to an incident plane, parallel to the top surface.

Again with reference to preferred embodiments, the notch extends over a length at least equal to 65% of the length of the edge formed by the intersection between the lateral surface of the block in which the notch is formed and the said top surface of the block.

Additionally, the ratio "p/l" between the maximum depth "p" of the notch measured in a direction perpendicular to the top surface of the block (at the base of the notch) and the maximum longitudinal extension "1" of the notch, measured along the corresponding edge on the top surface, is in the range from 0.06 to 0.6.

Further characteristics and advantages will be made clearer by the following description of a preferred example of embodiment of a tyre according to the invention, provided for information and without restrictive intent with reference to the attached drawings, in which:
Figure 1 shows a cross-sectional view of a tyre according to the invention;
Figure 2 shows a schematic partial development in plan view of the tread of the tyre of Figure 1;
Figure 3 shows an enlargement of a block of the tread of Figure 2;
Figure 4 shows a variant of some characteristics of the block of Figure 3;
Figure 5 shows an enlargement of some characteristics of the block of Figure 3 and some variant embodiments of the said characteristics;
Figure 6 shows in plan view a schematic pattern for a tread which is an alternative to that of Figure 2, orientated in a predetermined direction of rolling of the tyre;
Figure 7 shows the pattern of Figure 6 orientated in the opposite direction with respect to the said direction of rolling of the tyre;
Figure 8 shows another variant embodiment of a block according to the invention;
Figure 9 shows a further example of embodiment of a block according to the invention;
Figure 10 shows the mid-line profile of a low-profile tyre to which the tread pattern according to the invention can be applied.

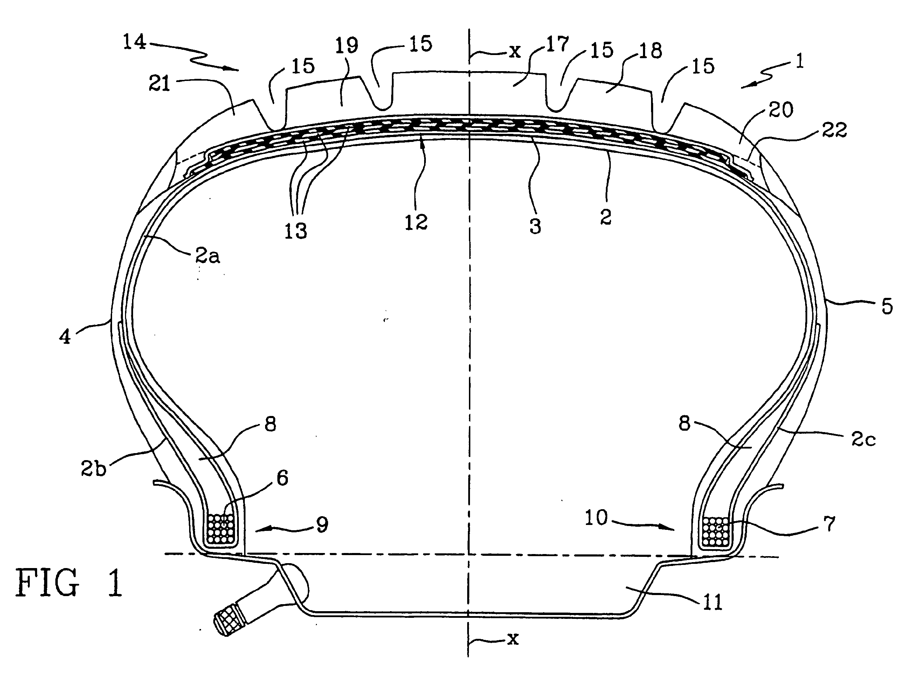

With reference to Figure 1, the number 1 indicates as a whole a tyre for motor vehicles according to the invention, for example a tyre of the 195/65 R15 grade.

The tyre 1 comprises a casing structure 2, including a central crown portion 3 and two axially opposed sidewalls 4 and 5, the said casing structure 2 being provided with a reinforcing ply 2a whose opposite ends 2b and 2c are turned up around corresponding bead wires 6 and 7.

In the aforesaid tyre, of the radial type, the cords of the said reinforcing ply lie in radial planes, in other words planes containing the axis of rotation of the said tyre, or in planes having a small inclination with respect to the said radial planes.

On the radially outer perimetric edge of the bead wires 6 and 7, located on the radially inner edges of the said sidewalls 4 and 5, there is applied an elastomeric filler 8 which occupies the space formed between the reinforcing ply 2a and the corresponding ends 2b and 2c of the reinforcing ply 2a.

The axially opposing areas of the tyre 1, each comprising a bead wire 6 or 7 and its filler 8, form what are called the beads, indicated as a whole by 9 and 10, which are designed to secure the tyre 1 on a corresponding mounting rim 11 of the wheel of a vehicle.

In the illustrated example, a belt structure 12, comprising one or more reinforcing strips 13 made from textile or metal cords incorporated in a given mixture, is coaxially associated with the aforesaid casing structure 2.

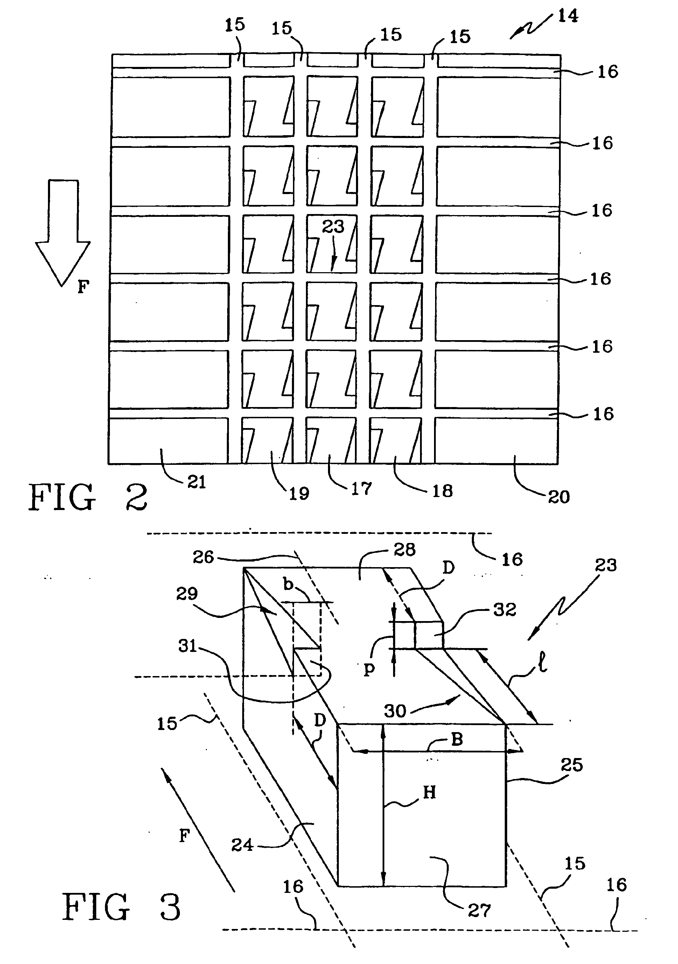

A tread 14 is applied in a known way to the belt structure 12; a relief pattern, illustrated only schematically in plan view in Figure 2, is cut in the thickness of the tread.

A tread with the said pattern is particularly suitable for running on snow-covered surfaces.

The tread 14 comprises four circumferential grooves 15 and a plurality of transverse grooves 16, which in combination delimit five rows of blocks having a square shape in plan view, namely a centre row 17 along the equatorial plane, two intermediate rows 18 and 19 at the sides of the central row, and two shoulder rows 20 and 21.

The blocks project from the base surface 22 of the tread, which coincides, in the illustration in Figure 1, with the layer of mixture positioned directly above the radially outermost reinforcing strip 13 in the belt structure 12, essentially at the base of the grooves.

More particularly, the blocks extend radially outwards up to their top surfaces, which coincide with the outer surface of the tread.

In the example illustrated in Figure 2, the tread is represented for simplicity with circumferential and transverse grooves running parallel and perpendicular to the equatorial plane respectively, but, as the following text will make clear, the invention is not limited to this particular representation, and includes, for example, circumferential grooves inclined at an angle in the range from 3° to 18° to the equatorial plane, zigzag circumferential grooves, transverse grooves with mid-lines inclined in a non-axial way with respect to the equatorial plane, transverse grooves with curvilinear mid-lines having a convex or concave configuration, or a combined configuration, in other words initially convex and subsequently concave or vice versa in the direction from a shoulder towards the equatorial plane, or again, for example, with a sinusoidal profile or the like in the transverse direction with respect to the tyre between the two shoulders, or in any case circumferential and/or transverse grooves orientated in such a way as to form any type of pattern, which may be symmetrical, asymmetrical or directional.

Preferably, the circumferential grooves have a width in the range from 3 to 18 mm and a depth in the range from 2 to 12 mm.

The transverse grooves have a width in the range from 1.5 to 9 mm and a depth in the range from 2 to 12 mm.

The blocks can have different shapes in plan view from that shown in Figure 2, and in general can have shapes in plan view in the form of rectangles, parallelograms, polygons or other geometrical figures or any shapes in which it is possible to identify at least one pair of transverse sides in a block, these sides being defined as front and rear according to the direction of rolling of the tyre.

These blocks project from the base surface in the form of parallelepipeds or other forms commonly used in commercially available tyres.

Figure 3 shows the shape of a block 23, for example a block of the central row 17 of the tread of Figures 1 and 2.

The block 17 has the configuration of a parallelepiped delimited by two longitudinal lateral surfaces 24 and 25, two transverse lateral surfaces 26 and 27 which are, respectively, the front and rear surfaces with respect to the direction of travel of the tyre, and a top surface 28.

In Figure 2, the direction of travel of the tyre is indicated by the arrow "F".

It should be noted that the longitudinal and transverse lateral surfaces of the block, together with the corresponding surfaces of the blocks of the adjacent rows, form the walls delimiting the longitudinal and transverse grooves.

In Figure 3, for simplicity, the longitudinal and transverse grooves have been identified by their mid-lines which are shown in broken lines.

As can be seen, the block 23 of Figure 3 has longitudinal lateral surfaces 24 and 25 forming the axially inner walls of the two circumferential grooves 15 delimiting the centre row 17 and transverse lateral surfaces 26 and 27, each forming one of the two walls of the transverse grooves 16 which are staggered circumferentially with respect to each other.

Moving on to the description of the preferred characteristics of the block 23, it will be noted that this comprises, between the top surface 28 and the longitudinal surfaces 24 and 25, a pair of notches 29 and 30, extending essentially in the circumferential direction, in other words with their greater dimensions orientated in the direction of the groove delimited by the wall in which the notch is formed.

These notches are referred to below as longitudinal notches.

The notches 29 and 30 have their sides open over their whole length both on to the groove delimited by the wall in which they are formed and on to the top surface 28.

These longitudinal notches are formed with profiles tapered in opposite directions to each other.

More particularly, it should be noted that the notch 29 has a direction of taper in the direction of travel F and the notch 30 is tapered in the opposite direction.

Preferably, the two longitudinal notches 29 and 30 are formed with identical dimensions and have identical appearances.

With reference to the illustration of the tread in Figure 2, it will be noted that all the blocks of all the rows are identical and each is provided with pairs of longitudinal notches with tapers running in opposite directions to each other.

In greater detail, with reference to Figures 2 and 3, it will be noted that each longitudinal notch can be formed in the delimiting wall of a groove by removal of elastomeric material or by another process used for manufacturing a tread provided with blocks, for example by moulding.

It should also be noted that the vertex of each longitudinal notch 29 and 30 in the embodiment of Figure 3 lies on the edge formed by the intersection between the delimiting wall of the longitudinal groove 15 in which the notch is formed and the adjacent wall which delimits the transverse groove 16 in the same block.

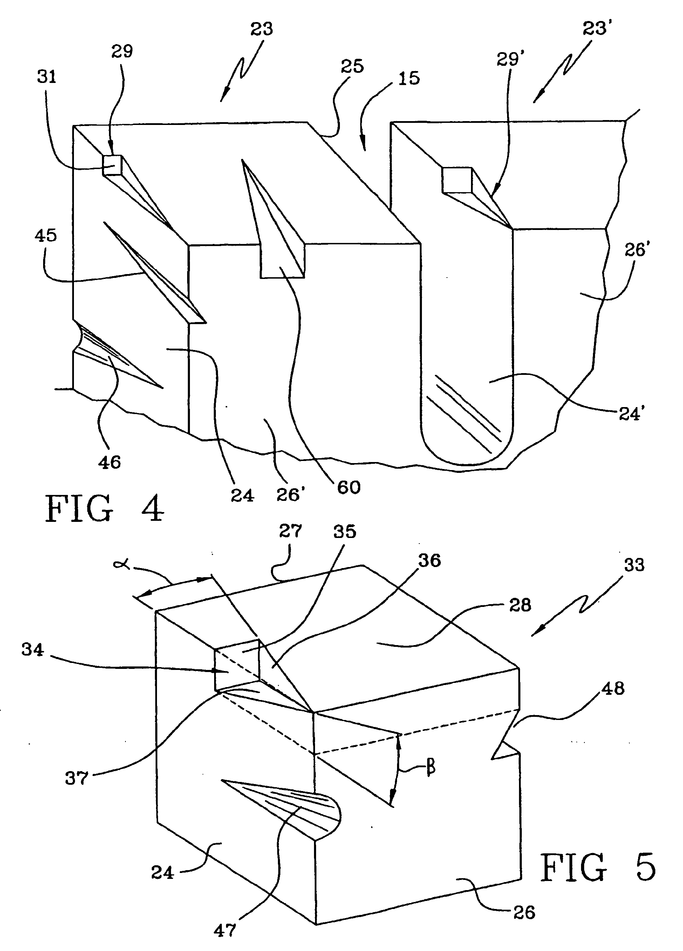

In a variant embodiment shown in Figure 4, the block 23 of the centre row comprises a single longitudinal notch 29 with its vertex separate from the edge formed by the intersection between the longitudinal 24 and transverse 26 surfaces, while the block 23' of the adjacent intermediate row has a longitudinal notch 29' with its vertex on the edge formed by the intersection between the lateral and transverse surfaces 24' and 26'.

Further characteristics of the longitudinal notches 29 and 30 of Figure 3 relate to their respective bases 31 and 32, formed by a plane intersecting the block perpendicularly to the equatorial plane and located at a predetermined distance "D" from the transverse wall of the block adjacent to the said base.

The distance "D" is measured along the edge forming the intersection between the top surface and the lateral surface of the block, and is equal to the distance between the said base and the edge opposite the vertex of the said notch.

More precisely, the base 31 is located at a distance "D" from the transverse surface 27, corresponding to the wall of the groove 16, opposite the vertex of the notch 29, and the base 32 is located at a distance "D" from the transverse wall 26, opposite the vertex of the notch 30.

Preferably, this distance "D" is not greater than 85% of the length of the edge formed by the intersection between the lateral surface 24 (or 25) in which the notch is formed and the top surface of the same block.

The tapered shape of the notches 29 and 30 has its maximum depth "p", measured in a direction perpendicular to the top surface of the block (at the bases 31 or 32 of the notches) and zero depth at the vertex.

In the preferred embodiment of Figure 3, the longitudinal notch has a maximum depth "p" measured on the plane parallel to the equatorial plane passing through the centre of the base and a maximum longitudinal extension "l" measured parallel to the edge formed by the intersection between the top surface 28 and the longitudinal wall 24 or 25 in which the notch is formed.

In this embodiment of the longitudinal notch, the ratio "p/l" is preferably in the range from 0.06 to 0.6.

These values of the ratio "p/l" are preferably associated with a block with a maximum height "H", measured between the base surface of the tread, from which the block projects, and the top surface.

Preferably, the value "H" is in the range from 2 to 12 mm.

In greater detail, in some preferred embodiments the maximum depth "p" is in the range from 1.5 to 7 mm, and the maximum extension "l" is in the range from 5 to 35 mm.

Preferably also, the ratio "b/B" between the side "b" of the base of the longitudinal notch and the maximum transverse extension "B" (Fig. 3) of the top surface of the block, measured on a plane perpendicular to the equatorial plane, is in the range from 0.06 to 0.6 .

In practice, both in the embodiment of Figure 3 and in other embodiments of the invention, the value of the ratio "b/B" expresses as a percentage the extension of the base of the notch into the body of the block relative to the maximum transverse dimension of the said block.

According to the invention, the aforesaid values of the ratios "p/l" and "b/B" and the value "H" are common to other preferred embodiments in which there are blocks having different shapes from that shown in Figure 3, but in all cases having shapes that can be delimited between at least two longitudinal surfaces and at least two transverse surfaces.

Preferably, the said longitudinal surfaces are predominantly orientated in the circumferential direction, or in any case inclined at an angle of not more than 45° to the said circumferential direction; the said transverse surfaces also run transversely to the direction of movement, or in any case are inclined at an angle preferably within the range from 90° to 45° with respect to the equatorial plane.

The lateral surfaces delimiting the notch, extending from the base to the vertex, can be formed in various ways.

To facilitate the understanding of this matter, a block 33 comprising 3 types of notch, indicated by 34, 47 and 48 respectively, is shown in Figure 5.

The notch 34 is delimited by a base 35 parallel to the transverse surface 27 and by two lateral surfaces 36 and 37, being the first and second surfaces respectively, formed along planes which are perpendicular to each other.

The first surface 36 is perpendicular to the top surface 28 and forms an angle α with the longitudinal surface 24 of the block.

The second surface 37 is inclined at an angle of β to a plane parallel to the top surface 28.

Preferably, the angle α is in the range from -30° to 30°; preferably, the angle β is in the range from - 30° to 30°.

In a different example of embodiment from that which has been described, the surface 36 can be orientated parallel to the lateral surface 24.

The notches 29 and 30 can be formed with delimiting surfaces in the same way as that illustrated by way of example for the notch 34 of Figure 5, or with variations of this forming process, for example with a first and a second surface 36 and 37 inclined at angles other than 90° to each other, as for example in the notch 48 of the said figure, or with the first and second surfaces having a configuration other than a flat one, and in particular forming a single curved surface such as that of the notch 47 in Figure 5.

With reference now to the performance of the tyre described and illustrated in Figures 1 to 3, the favourable behaviour of this tyre on snow-covered ground will be demonstrated.

When the tyre is travelling in the rolling direction F, each longitudinal notch 29 initially meets the ground with its vertex in the optimal position to enable snow to efficiently enter and be compacted in the empty space between the vertex and the base 31.

This filling with snow and its compacting in the longitudinal notches 29 and 30 present in the blocks of the tread pattern gives rise to a plurality of areas distributed both circumferentially and transversely, which behave as elements for retaining the snow which has penetrated into the grooves between the blocks of the pattern, these elements impeding the discharge of the snow from the aforesaid pattern and thus advantageously maximizing the friction of the tyre on the snow-covered ground.

This advantageous result is achieved in all conditions of travel of the tyre, in other words in straight running and in cornering, and in acceleration as well as in braking, both for tyres fitted on the driving axle and for those fitted on the idle axle.

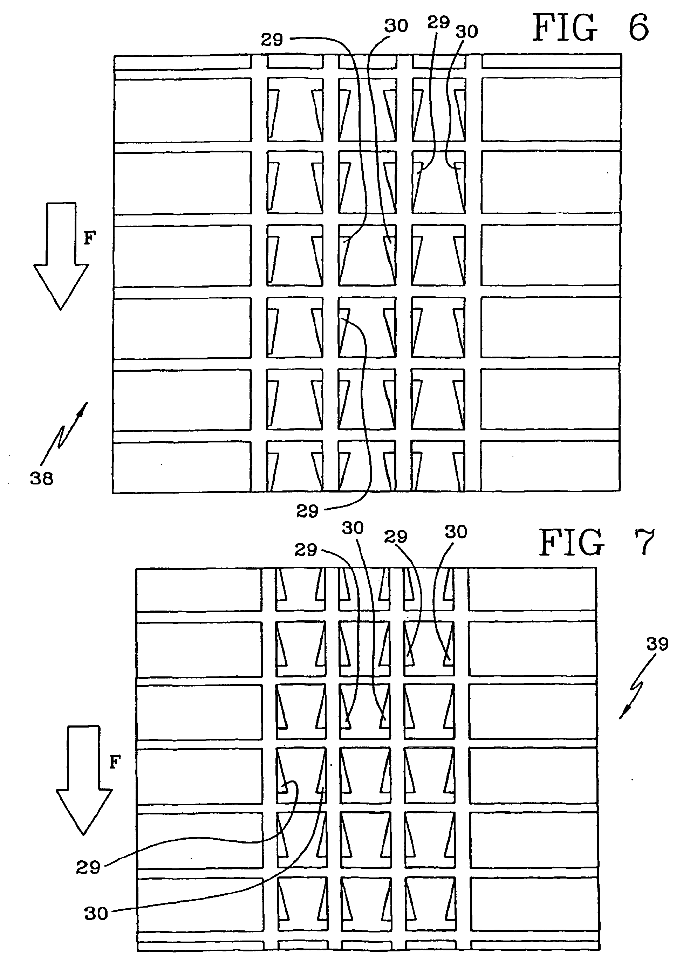

In order to increase the traction on snow-covered ground, the tyre comprises, in a variant embodiment, a tread with the pattern shown in Figure 6.

This tyre is illustrated here with a tread identical to that of Figure 2, except for the characteristic that each block in all the rows comprises two longitudinal notches 29 and 30 identical to those described above, but both tapered in the direction of rolling F.

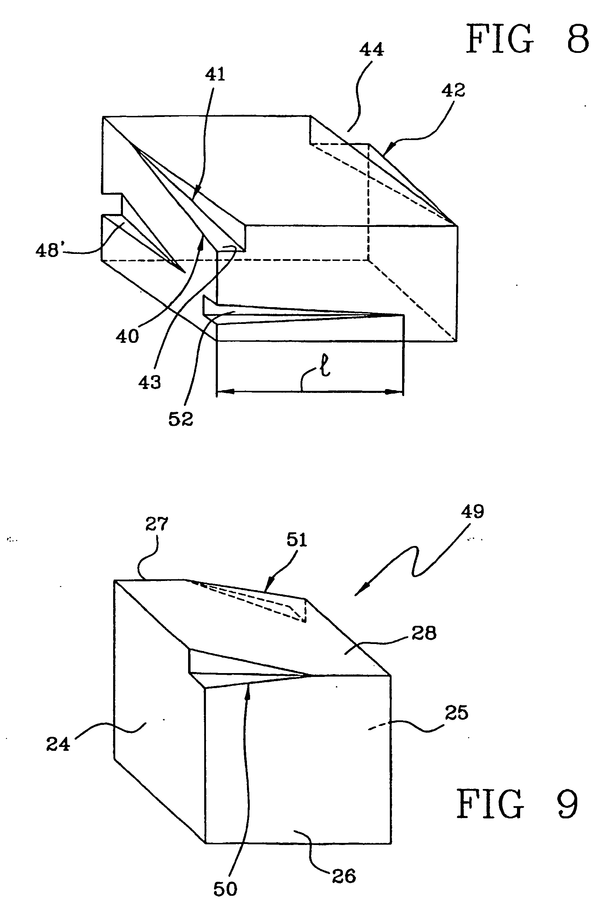

The variant shown in Figure 7 differs from those of Figures 2 and 6 in that each block in all the rows comprises a pair of longitudinal notches 29 and 30 tapered in the opposite direction to the direction of rolling F.

The tread has been described up to this point with reference to longitudinal notches 29 and 30 which are identical to each other in all the embodiments of Figures 2, 6 and 7.

In an alternative variant embodiment, the tread essentially has the same characteristics, except that it comprises one or more rows of blocks 40 (Fig. 8), each comprising a pair of longitudinal notches 41 and 42, tapered in opposite directions to each other, but with bases 43 and 44 opening on to the transverse grooves 16.

Alternatively, some embodiments of blocks according to the invention have longitudinal notches formed at a depth intermediate between the top surface and the base surface of the block.

Finally, in another variant embodiment shown in Figure 4, the blocks of the tyre according to the invention have longitudinal notches (60) or transverse notches having their sides open only on the said top surfaces, the said notches being located preferably along the mid-lines of these surfaces.

In some embodiments, therefore, the tread shown in Figures 2, 6 and 7 can comprise one or more rows of blocks, each comprising, in combination or alternatively, longitudinal notches 29 and 30, further longitudinal notches 45, 46 and 60, as shown in Figure 4, longitudinal notches similar to those indicated by the references 47 and 48 in Figure 5, and also one or more longitudinal notches 48' as shown in Figure 8.

In particular, Figure 4 shows some embodiments comprising a longitudinal notch 46 with a semicircular base and a curved lateral wall, while the longitudinal notch 45 has two flat delimiting surfaces along its extension, forming an acute angle between them.

Advantageously, these notches 45, 46, 47, 48 and 48' associate their action with that of the notches 29 and 30, in that they maximize the quantity of fresh snow which can be captured by the grooves which these notches face.

The result of the present of the notches 45, 46, 47, 48 and 48' is to facilitate a considerable compression of the snow between the walls of the blocks, causing the snow to become trapped.

In practice, the incorporation of the snow in the appropriate spaces of the tread is stably maintained, thus maximizing the snow-on-snow friction.

In the most general form, the tyre according to the invention can comprise transverse notches formed in each block, for example by removing elastomeric material between the top surface and the transverse surface forming one of the delimiting walls of a transverse groove.

The configuration of the transverse notches in the preferred shape is identical to that described with respect to the longitudinal notches 29 and 30 of Figure 3, except for the fact that the transverse notches are made along transverse surfaces of the block.

By way of example, Figure 9 shows a block 49 comprising two transverse notches 50 and 51, the first located between the top surface 28 and the transverse surface 26, and the second located between the top surface 28 and the transverse surface 27.

In the preferred shape of the transverse notches 50 and 51, the bases are closed in the same way as that of the longitudinal notch 34 shown in Figure 5, instead of being open outwards, as shown in the variant of Figure 9.

The transverse notches 50 and 51 have a function similar to that of the longitudinal notches, except in that they carry out their action of collecting and incorporating snow especially when the tyre is travelling round corners or under the action of slip forces.

It is also possible, in the case of transverse notches, to use transverse notches formed at a distance from the top surface of the block, as described above, for example as indicated for the transverse notch 52 of the block of Figure 8.

It should be noted that the block forming part of the tyre according to the invention can comprise either longitudinal notches only, or transverse notches only, or both types of notch.

Advantageously, a large number of notches corresponds to a greater degree of deformability of the block, with consequently greater comfort during the travel of the tyre on dry roads, although a greater degree of deformability, by comparison with a block not having these notches, can cause a deterioration of behaviour on dry ground, particularly in terms of wear resistance.

In order not to compromise this performance, the applicant has found that, in the tyre according to the invention, the ratio between solid areas and voids in each block should preferably be in the range from 0.007 to 0.07.

It should also be noted that the presence of particularly long notches on top of the block tends to impart to the block, and therefore to the tread as a whole, a greater resistance, when travelling on snow-covered ground, to tangential stresses, particularly those present in cornering, in the axial direction of the tyre.

This favourable situation appears to depend on the formation of a step below the top surface of the block: it has been found that this step also improves the behaviour of the tyre on dry roads, in cornering and in braking, since it forms two edges (in place of a single edge as in blocks without notches) which act jointly to withstand the tangential, axial and circumferential forces applied to the block.

The result is unexpected, since the search for means of improving the grip on snow did not yield any indication that advantages would also be achieved in the running of the tyre on dry roads.

Awareness of the achievement of both an improvement on snow-covered ground and improvements in terms of the resistance of the block to tangential stresses on dry roads resulted from the observation of the behaviour of the tyre according to the invention, by comparison with a tyre with blocks not having notches, during cornering.

More particularly, a better knowledge of the favourable obtained results was pointed out from the observation during cornering of a tyre according to the invention comprising a footprint area very narrow in the travelling direction in respect of a tyre having the same footprint area but blocks without notches.

To enable the situation to be understood more clearly, it may be mentioned that, as persons skilled in the art will know, a tyre inflated to a given pressure specified by the manufacturer is deformed in contact with the ground in a footprint area characterized by a particular ratio between the length measured in the direction of the equatorial plane and the width measured in the axial direction.

There are known tyres on the market having footprint areas in which the said ratio is greater than 1, for example tyres of the 175/70R13 and 175/65R14 grades, as well as tyres having footprints with a ratio of less than 1, for example tyres of the 225/40R18 and 265/35R18 grades.

A tyre with a footprint area having a ratio of less than 1 tends to have less cornering stability than a tyre with a footprint area having a ratio of more than 1.

Given the above, it was found that tyres having a footprint area greater than 1 provided with longitudinal notches on the tops of the blocks have greater cornering stability than those having the same design and footprint area but having blocks without notches.

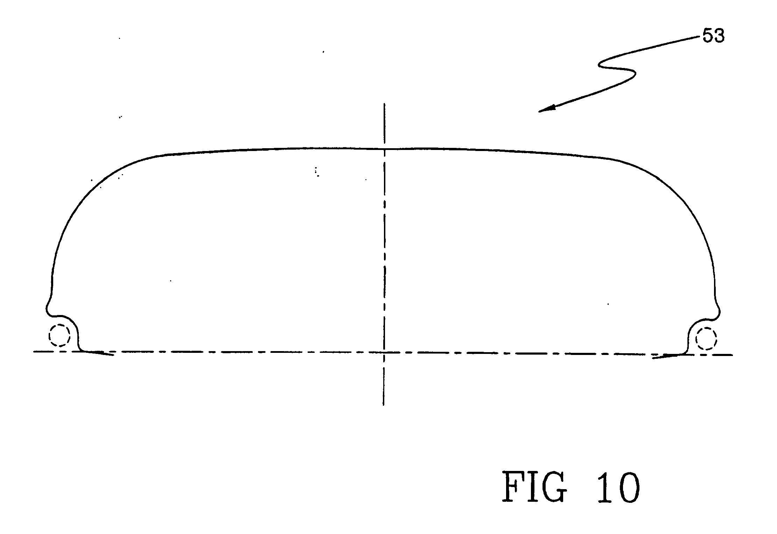

In respect of tyres with a footprint area of less than 1, Figure 10 shows the mid-line profile 53 of a low-profile tyre of the 265/35R18 grade, provided with the tread pattern according to the invention with improved cornering stability.

The low-profile tyre shown in Figure 10 shows particularly advantageous results in gripping on snow both in traction and in braking when it is provided with the longitudinal notches on the tops of the blocks as shown in Figures 2 and 3.

The invention has been described with reference to certain examples of embodiment, but the illustrated solutions are equally applicable to tyres with any number of circumferential rows of blocks, regardless of whether the said rows of blocks are delimited by straight rather than zigzag grooves or whether the blocks comprise sipes, either straight or zigzag, and also to tyres for any kind of vehicle and operation, since the provision made according to the invention for running on snow does not adversely affect running on dry roads.

Furthermore, the longitudinal notches of the blocks of one row could be staggered circumferentially with respect to those of the adjacent row by an amount different from that shown in Figures 2, 6 and 7, for example in order to improve the quietness of running.

## Claims

1. Tyre, particularly suitable for snow-covered ground, comprising a tread (14) provided with a relief pattern delimited by a plurality of circumferential (15) and transverse (16) grooves forming at least one circumferential row (17, 18, 19, 20, 21) of blocks (23, 33, 40, 49) projecting from a base surface (22) of the said tread and extending radially outwards as far as their top surface (28), each block being delimited by longitudinal lateral surfaces (24, 25) and transverse lateral surfaces (26, 27), each of the said surfaces being part of at least one wall of the said grooves (15, 16), in which at least one of the said blocks has at least one notch (29, 29', 30, 34, 41, 42, 45, 46, 47, 48, 48', 50, 51, 52, 60) in one of the said surfaces (24, 25, 26, 27, 28), the said notch has its greater dimension orientated in the direction of one of the said circumferential or transverse grooves delimited by the said walls and is tapered along the said greater dimension between a base and a vertex opposite the said base **characterised in that** the said notch has at least one of its sides open along its whole length on one of the said longitudinal lateral surface (24,25) or transverse lateral surface (26,27).

2. Tyre according to Claim 1, **characterized in that** the said notch (29, 29', 30, 34, 41, 42, 45, 46, 47, 48, 48', 50, 51, 52) is formed along a delimiting edge between the said top surface (28) and the said wall delimiting the said groove (15, 16).

3. Tyre according to Claim 1, **characterized in that** each of the blocks (23, 33, 40, 49) of at least one circumferential row (17, 18, 19, 20, 21) comprises at least one notch (29, 29', 30, 34, 41, 42, 45, 46, 47, 48, 48', 50, 51, 52, 60).

4. Tyre according to Claim 1, **characterized in that** the said base of the said notch (29, 29', 30, 34, 41, 42, 45, 46, 47, 48, 48', 50, 51, 52, 60) is generated by a plane intersecting the said block (23, 33, 40, 49) at a predetermined distance from the said vertex.

5. Tyre according to Claim 1, **characterized in that** one or more of the notches (29, 29', 30, 34, 41, 42, 45, 46, 47, 48, 48', 50, 51, 52, 60) present in a surface of the said block (23, 33, 40, 49) delimiting the same groove are tapered in the same direction.

6. Tyre according to Claim 5, **characterized in that** the said taper direction is opposite to the direction of rolling of the said tyre.

7. Tyre according to Claim 1, **characterized in that** at least two of the notches (29, 29', 30, 34, 41, 42, 45, 46, 47, 48, 48', 50, 51, 52) present in a surface of the said block (23, 33, 40, 49) delimiting the same groove are tapered in opposite directions.

8. Tyre according to Claim 1, **characterized in that** each block (23, 33, 40, 49) of the said at least one row (17, 18, 19, 20, 21) comprises at least a first and a second longitudinal notch (29, 29', 30, 34, 41, 42, 45, 46, 48'), the first notch being on the delimiting edge between the said top surface (28) and a first longitudinal lateral surface (24, 25), and the second notch being on the delimiting edge between the top surface and a second longitudinal lateral surface.

9. Tyre according to Claim 8, **characterized in that** the said first and second notches (29, 29', 30, 34, 41, 42, 45, 46, 48') have tapers running in opposite directions to each other.

10. Tyre according to Claim 1, **characterized in that** it comprises, in at least one block (23, 33, 40, 49), at least one notch (50, 51, 52) running transversely with respect to the direction of movement.

11. Tyre according to Claim 10, **characterized in that** the said at least one transverse notch (50, 51, 52) is formed along a delimiting edge between the said top surface (28) and one of the said two transverse lateral surfaces (26, 27) of the said block (23, 33, 40, 49).

12. Tyre according to Claim 11, **characterized in that** it comprises, for each of the said blocks (23, 33, 40, 49), a pair of the said notches (50, 51, 52) which are transverse with respect to the direction of movement.

13. Tyre according to Claim 10, **characterized in that** the said block (23, 33, 40, 49) has one or more longitudinal notches (29, 29', 30, 34, 41, 42, 45, 46, 48') .

14. Tyre according to Claim 1, **characterized in that** the said notch (29, 29', 30, 34, 41, 42, 45, 46, 47, 48, 48', 50, 51, 52, 60) has a pyramidal shape, essentially delimited by the said base and by two lateral planes, namely the first and the second plane, which are incident on each other.

15. Tyre according to Claim 14, **characterized in that** the said first plane is perpendicular to the top surface (28) of the said block (23, 33, 40, 49) and inclined at an angle α to the said wall of the groove in which the said notch (29, 29', 30, 34, 41, 42, 45, 46, 47, 48, 48', 50, 51, 52, 60) is formed, while the said second plane is inclined at an angle β to an incident plane, parallel to the said top surface.

16. Tyre according to Claim 15, **characterized in that** the said angle α is in the range from -30° to 30°.

17. Tyre according to Claim 15, **characterized in that** the said angle β is in the range from -30° to 30°.

18. Tyre according to Claim 1, **characterized in that** the said notch (29, 29', 30, 34, 41, 42, 45, 46, 47, 48, 48', 50, 51, 52) extends over a length at least equal to 65% of the length of an edge formed by the intersection between the said lateral surface of the block (23, 33, 40, 49) in which the said notch is formed and the said top surface (28) of the block.

19. Tyre according to Claim 1, **characterized in that** the ratio "p/l" between the maximum depth "p" of the said notch (29, 29', 30, 34, 41, 42, 45, 46, 47, 48, 48', 50, 51, 52, 60) measured in a direction perpendicular to the said top surface of the block, at the said base of the notch, and the maximum longitudinal extension "l" of the said notch, measured along a corresponding edge on the top surface (28), is in the range from 0.06 to 0.6.

## Patentansprüche

1. Insbesondere für schneebedeckten Boden geeigneter Reifen, welcher
- eine Lauffläche (14) aufweist, die mit einem Reliefmuster versehen ist, das von einer Vielzahl von Umfangsnuten (15) und Quemuten (16) begrenzt wird, die wenigstens eine Umfangsreihe (17, 18, 19, 20, 21) von Blöcken (23, 33, 40, 49) bilden, die von einer Grundfläche (22) der Lauffläche vorstehen und sich radial nach außen so weit wie ihre obere Fläche (28) erstrecken, wobei
- jeder Block durch Längsseitenflächen (24, 25) und Querseitenflächen (26, 27) begrenzt ist, von denen jede Teil wenigstens einer Wand der Nuten (15, 16) ist, in der wenigstens einer Blöcke wenigstens eine Einkerbung (29, 29', 30, 34, 41, 42, 45, 46, 47, 48, 48', 50, 51, 52, 60) in einer der Flächen (24, 25, 26, 27, 28) hat, und
- die Einkerbung mit ihrer größeren Abmessung in die Richtung einer der Umfangs- oder Quemuten ausgerichtet ist, die von den Wänden begrenzt werden, und sich längs der größeren Abmessung zwischen einer Basis und einer der Basis gegenüberliegenden Spitze verjüngt,
**dadurch gekennzeichnet,**
- **dass** wenigstens eine der Seiten der Einkerbung längs ihrer gesamten Länge an einer der Längsseitenflächen (24, 25) oder Querseitenflächen (26, 27) offen ist.

2. Reifen nach Anspruch 1, **dadurch gekennzeichnet, dass** die Einkerbung (29, 29', 30, 34, 41, 42, 45, 46, 47, 48, 48', 50, 51, 52) längs eines begrenzenden Randes zwischen der oberen Fläche (28) und der die Nut (15, 16) begrenzenden Wand ausgebildet ist.

3. Reifen nach Anspruch 1, **dadurch gekennzeichnet, dass** jeder der Blöcke (23, 33, 40, 49) wenigstens einer Umfangsreihe (17, 18, 19, 20, 21) wenigstens eine Einkerbung (29, 29', 30, 34, 41, 42, 45, 46, 47, 48, 48', 50, 51, 52, 60) aufweist.

4. Reifen nach Anspruch 1, **dadurch gekennzeichnet, dass** die Basis der Einkerbung (29, 29', 30, 34, 41, 42, 45, 46, 47, 48, 48', 50, 51, 52, 60) von einer Ebene erzeugt wird, die den Block (23, 33, 40, 49) in einer vorgegebenen Entfernung von der Spitze schneidet.

5. Reifen nach Anspruch 1, **dadurch gekennzeichnet, dass** eine oder mehrere der Einkerbungen (29, 29', 30, 34, 41, 42, 45, 46, 47, 48, 48', 50, 51, 52, 60), die in einer Fläche des Blocks (23, 33, 40, 49) vorhanden sind, der die gleiche Nut begrenzt, sich in der gleichen Richtung verjüngen.

6. Reifen nach Anspruch 5, **dadurch gekennzeichnet, dass** die Verjüngungsrichtung zur Abrollrichtung des Reifens entgegengesetzt ist.

7. Reifen nach Anspruch 1, **dadurch gekennzeichnet, dass** wenigstens zwei der Einkerbungen (29, 29', 30, 34, 41, 42, 45, 46, 47, 48, 48', 50, 51, 52), die in einer Fläche des Blocks (23, 33, 40, 49) vorhanden sind, der die gleiche Nut begrenzt, sich in entgegengesetzte Richtungen verjüngen.

8. Reifen nach Anspruch 1, **dadurch gekennzeichnet, dass** jeder Block (23, 33, 40, 49) der wenigstens einen Reihe (17, 18, 19, 20, 21) wenigstens eine erste und eine zweite in Längsrichtung verlaufende Einkerbung (29, 29', 30, 34, 41, 42, 45, 46, 48') aufweist, wobei die erste Einkerbung sich auf dem begrenzenden Rand zwischen der oberen Fläche (28) und der ersten Längsseitenfläche (24, 25) befindet, während sich die zweite Einkerbung auf dem begrenzenden Rand zwischen der oberen Fläche und einer zweiten Längsseitenfläche befindet.

9. Reifen nach Anspruch 8, **dadurch gekennzeichnet, dass** die ersten und zweiten Einkerbungen (29, 29', 30, 34, 41, 42, 45, 46, 48') Verjüngungen aufweisen, die in entgegengesetzte Richtungen zueinander verlaufen.

10. Reifen nach Anspruch 1, **dadurch gekennzeichnet, dass** er in wenigstens einem Block (23, 33, 40, 49) wenigstens eine Einkerbung (50, 51, 52) aufweist, die bezüglich der Bewegungsrichtung quer verläuft.

11. Reifen nach Anspruch 10, **dadurch gekennzeichnet, dass** die wenigstens eine quer verlaufende Einkerbung (50, 51, 52) längs eines begrenzenden Randes zwischen der oberen Fläche (28) und einer der beiden Querseitenflächen (26, 27) des Blocks (23, 33, 40, 49) ausgebildet ist.

12. Reifen nach Anspruch 11, **dadurch gekennzeichnet, dass** er für jeden der Blöcke (23, 33, 40, 49) ein Paar der Einkerbungen (50, 51, 52) aufweist, die bezüglich der Bewegungsrichtung quer verlaufen.

13. Reifen nach Anspruch 10, **dadurch gekennzeichnet, dass** der Block (23, 33, 40, 49) eine oder mehrere in Längsrichtung verlaufende Einkerbungen (29, 29', 30, 34, 41, 42, 45, 46, 48') hat.

14. Reifen nach Anspruch 1, **dadurch gekennzeichnet, dass** die Einkerbung (29, 29', 30, 34, 41, 42, 45, 46, 47, 48, 48', 50, 51, 52, 60) eine Pyramidenform hat, die im Wesentlichen von der Grundfläche und von zwei seitlichen Ebenen begrenzt wird, nämlich der ersten und der zweiten Ebene, die aufeinander einfallen.

15. Reifen nach Anspruch 14, **dadurch gekennzeichnet, dass** die erste Ebene senkrecht zur oberen Fläche (28) des Blocks (23, 33, 40, 49) und mit einem Winkel α zu der Wand der Nut geneigt ist, in der die Einkerbung (29, 29', 30, 34, 41, 42, 45, 46, 47, 48, 48', 50, 51, 52, 60) ausgebildet ist, während die zweite Ebene mit einem Winkel β zu einer Einfallsebene geneigt ist, die parallel zu der oberen Fläche ist.

16. Reifen nach Anspruch 15, **dadurch gekennzeichnet, dass** der Winkel α in dem Bereich von -30° bis 30° liegt.

17. Reifen nach Anspruch 15, **dadurch gekennzeichnet, dass** der Winkel β in dem Bereich von -30° bis 30° liegt.

18. Reifen nach Anspruch 1, **dadurch gekennzeichnet, dass** sich die Einkerbung (29, 29', 30, 34, 41, 42, 45, 46, 47, 48, 48', 50, 51, 52) über eine Länge erstreckt, die wenigstens gleich 65% der Länge eines Randes ist, der von dem Schnitt zwischen der Seitenfläche des Blocks (23, 33, 40, 49), in der die Einkerbung ausgebildet ist, und der oberen Fläche (28) des Blocks gebildet wird.

19. Reifen nach Anspruch 1, **dadurch gekennzeichnet, dass** das Verhältnis "p/l" zwischen der maximalen Tiefe "p" der Einkerbung (29, 29', 30, 34, 41, 42, 45, 46, 47, 48, 48', 50, 51, 52, 60), gemessen in eine Richtung senkrecht zu der oberen Fläche des Blocks an der Basis der Einkerbung, und der maximalen Längserstreckung "l" der Einkerbung, gemessen längs eines entsprechenden Randes an der oberen Fläche (28), im Bereich von 0,06 bis 0,6 liegt.

## Revendications

1. Pneu, adapté en particulier aux sols enneigés, comprenant une bande de roulement (14) munie de sculptures délimitées par une pluralité de rainures circonférentielles (15) et transversales (16) formant au moins une rangée circonférentielle (17, 18, 19, 20, 21) de blocs (23, 33, 40, 49) faisant saillie depuis une surface de base (22) de ladite bande de roulement et s'étendant radialement vers l'extérieur jusqu'à leur surface supérieure (28), chaque bloc étant délimité par des surfaces latérales longitudinales (24, 25) et des surfaces latérales transversales (26, 27), chacune desdites surfaces faisant partie d'au moins une paroi desdites rainures (15, 16), dans lesquelles au moins l'un desdits blocs comporte au moins une entaille (29, 29', 30, 34, 41, 42, 45, 46, 47, 48, 48', 50, 51, 52, 60) dans l'une desdites surfaces (24, 25, 26, 27, 28), ladite entaille a sa plus grande dimension orientée dans la direction de l'une desdites rainures circonférentielles ou transversales délimitées par lesdites parois et se rétrécit suivant ladite dimension la plus grande entre une base et un sommet à l'opposé de ladite base, **caractérisé en ce que** ladite entaille a au moins l'un de ses côtés ouverts sur toute sa longueur sur l'une desdites surface latérale longitudinale (24, 25) ou surface latérale transversale (26, 27).

2. Pneu selon la revendication 1, **caractérisé en ce que** ladite entaille (29, 29', 30, 34, 41, 42, 45, 46, 47, 48, 48', 50, 51, 52) est formée le long d'un bord de délimitation entre ladite surface supérieure (28) et ladite paroi délimitant ladite rainure (15, 16).

3. Pneu selon la revendication 1, **caractérisé en ce que** chacun des blocs (23, 33, 40, 49) d'au moins une rangée circonférentielle (17, 18, 19, 20, 21) comprend au moins une entaille (29, 29', 30, 34, 41, 42, 45, 46, 47, 48, 48', 50, 51, 52, 60).

4. Pneu selon la revendication 1, **caractérisé en ce que** ladite base de ladite entaille (29, 29', 30, 34, 41, 42, 45, 46, 47, 48, 48', 50, 51, 52, 60) est générée par un plan coupant ledit bloc (23, 33, 40, 49) à une distance prédéterminée dudit sommet.

5. Pneu selon la revendication 1, **caractérisé en ce que** l'une ou plusieurs desdites entailles (29, 29', 30, 34, 41, 42, 45, 46, 47, 48, 48', 50, 51, 52, 60) présentes dans une surface dudit bloc (23, 33, 40, 49) délimitant la même rainure sont rétrécies dans la même direction.

6. Pneu selon la revendication 5, **caractérisé en ce que** ladite direction de rétrécissement est opposée à la direction de roulement dudit pneu.

7. Pneu selon la revendication 1, **caractérisé en ce qu'**au moins deux desdites entailles (29, 29', 30, 34, 41, 42, 45, 46, 47, 48, 48', 50, 51, 52) présentes dans une surface dudit bloc (23, 33, 40, 49) délimitant la même rainure sont rétrécies dans des directions opposées.

8. Pneu selon la revendication 1, **caractérisé en ce que** chaque bloc (23, 33, 40, 49) de ladite au moins une rangée (17, 18, 19, 20, 21) comprend au moins une première et une deuxième entaille longitudinale (29, 29', 30, 34, 41, 42, 45, 46, 48'), la première entaille se trouvant sur le bord de délimitation entre ladite surface supérieure (28) et une première surface latérale longitudinale (24, 25), et la deuxième entaille se trouvant sur le bord de délimitation entre la surface supérieure et une deuxième surface latérale longitudinale.

9. Pneu selon la revendication 8, **caractérisé en ce que** lesdites première et deuxième entailles (29, 29', 30, 34, 41, 42, 45, 46, 48') ont des rétrécissements qui vont dans des directions opposées l'une par rapport à l'autre.

10. Pneu selon la revendication 1, **caractérisé en ce qu'**il comprend, dans au moins un bloc (23, 33, 40, 49), au moins une entaille (50, 51, 52) orientée transversalement par rapport à la direction de déplacement.

11. Pneu selon la revendication 10, **caractérisé en ce que** ladite au moins une entaille transversale (50, 51, 52) est formée le long d'un bord de délimitation entre ladite surface supérieure (28) et l'une desdites deux surfaces latérales transversales (26, 27) dudit bloc (23, 33, 40, 49).

12. Pneu selon la revendication 11, **caractérisé en ce qu'**il comprend, pour chacun desdits blocs (23, 33, 40, 49), une paire desdites entailles (50, 51, 52) qui sont transversales par rapport à la direction de déplacement.

13. Pneu selon la revendication 10, **caractérisé en ce que** ledit bloc (23, 33, 40, 49) comporte une ou plusieurs entailles longitudinales (29, 29', 30, 34, 41, 42, 45, 46, 48').

14. Pneu selon la revendication 1, **caractérisé en ce que** ladite entaille (29, 29', 30, 34, 41, 42, 45, 46, 47, 48, 48', 50, 51, 52, 60) a une forme pyramidale, essentiellement délimitée par ladite base et par deux plans latéraux, à savoir le premier et le deuxième plans, qui sont incidents l'un sur l'autre.

15. Pneu selon la revendication 14, **caractérisé en ce que** ledit premier plan est perpendiculaire à la surface supérieure (28) dudit bloc (23, 33, 40, 49) et est incliné d'un angle α par rapport à ladite paroi de la rainure dans laquelle ladite entaille (29, 29', 30, 34, 41, 42, 45, 46, 47, 48, 48', 50, 51, 52, 60) est formée, tandis que ledit deuxième plan est incliné d'un angle β par rapport à un plan incident, parallèle à ladite surface supérieure.

16. Pneu selon la revendication 15, **caractérisé en ce que** ledit angle α est compris dans l'intervalle de -30° à 30°.

17. Pneu selon la revendication 15, **caractérisé en ce que** ledit angle β est compris dans l'intervalle de -30° à 30°.

18. Pneu selon la revendication 1, **caractérisé en ce que** ladite entaille (29, 29', 30, 34, 41, 42, 45, 46, 47, 48, 48', 50, 51, 52) s'étend sur une longueur au moins égale à 65 % de la longueur d'un bord formé par l'intersection entre ladite surface latérale du bloc (23, 33, 40, 49) dans lequel ladite entaille est formée et ladite surface supérieure (28) du bloc.

19. Pneu selon la revendication 1, **caractérisé en ce que** le rapport "p/l" entre la profondeur maximale "p" de ladite entaille (29, 29', 30, 34, 41, 42, 45, 46, 47, 48, 48', 50, 51, 52, 60) mesurée dans une direction perpendiculaire à ladite surface supérieure du bloc, au niveau de ladite base de l'entaille, et l'étendue longitudinale maximale "l" de ladite entaille, mesurée le long d'un bord correspondant sur la surface supérieure (28), se trouve dans l'intervalle de 0,06 à 0,6.
